# EUROPEAN PATENT APPLICATION

(11) **EP 4 678 608 A1**
(43) Date of publication of application: **14.01.2026**
(21) Application number: 24766804.9
(22) Date of filing: 14.02.2024
(51) Int. Cl.: C03C 17/25, B32B 17/10

(54) **GLASS ARTICLE WITH EASY-TO-CLEAN COATING**

(30) Priority: 09.03.2023 JP 2023036435
(71) Applicant: NIPPON SHEET GLASS COMPANY, LIMITED, Tokyo 108-6321 (JP)
(72) Inventor: KAWAZU, Mitsuhiro, Tokyo 108-6321 (JP); IIDA, Genichiro, Tokyo 108-6321 (JP)
(74) Representative: Ellis, Gordon Lee
(86) International application number: PCT/JP2024/005115
(87) International publication number: WO 2024/185432

(57) **Abstract**

Provided is a coating-attached glass article including: a glass substrate; and an easy-to-clean coating on the glass substrate, wherein the glass substrate has a function or composition that suppresses diffusion of an alkali metal element into the coating, and the easy-to-clean coating contains an inorganic substance as a main component. The glass article satisfies at least one selected from the group consisting of the following (i) to (iv): (i) the glass substrate is formed of alkali-free glass; (ii) the glass substrate is formed of low-alkali glass; (iii) the glass substrate includes a dealkalized layer in a surface on a coating side; and (iv) an underlayer is provided between the glass substrate and the coating.

## Description

### TECHNICAL FIELD

The present invention relates to an easy-to-clean-coating-attached glass article.

### BACKGROUND ART

A coating called an easy-to-clean coating may be formed on the surface of a glass substrate or other types of substrates. The easy-to-clean coating imparts easy-to-clean properties that facilitate removal of dirt adhering to the surface. Easy-to-clean coatings are commonly formed by applying a treatment agent including a fluorine-containing compound or a silicone-based compound.

Techniques for imparting easy-to-clean properties without relying on organic substances are also under study. For example, Patent Literature 1 discloses a technique for sintering an oxide ceramic by firing the oxide ceramic at 1600°C for 5 hours in an atmosphere having a low organic substance concentration and a low moisture concentration. The oxides exemplified therein constituting oxide ceramics include rare earth oxides, such as CeO₂, aluminum oxide, and titanium oxide.

### CITATION LIST

### Patent Literature

Patent Literature 1: JP 2015-140277 A

### SUMMARY OF INVENTION

### Technical Problem

Glass substrates are sometimes subjected to a treatment involving heating under temperature and heating duration conditions that do not cause the glass substrates to soften. According to studies conducted by the present inventors, the easy-to-clean properties of an easy-to-clean coating formed on a glass substrate can significantly deteriorate after the formation of the coating. This deterioration is caused, for example, by heating of the glass substrate. Furthermore, heat treatment of the glass substrate can cause a variation in the easy-to-clean properties depending on the region of the glass substrate.

In view of the above, the present invention aims to provide an easy-to-clean-coating-attached glass article suitable for suppressing deterioration in easy-to-clean properties and for suppressing variation in easy-to-clean properties.

### Solution to Problem

The present invention provides a coating-attached glass article including:
a glass substrate; and
an easy-to-clean coating on the glass substrate, wherein
the glass substrate has a function or composition that suppresses diffusion of an alkali metal element into the coating, and
the easy-to-clean coating contains an inorganic substance as a main component.

### Advantageous Effects of Invention

The present invention provides an easy-to-clean-coating-attached glass article suitable for suppressing deterioration in easy-to-clean properties and for suppressing variation in easy-to-clean properties.

### BRIEF DESCRIPTION OF DRAWINGS

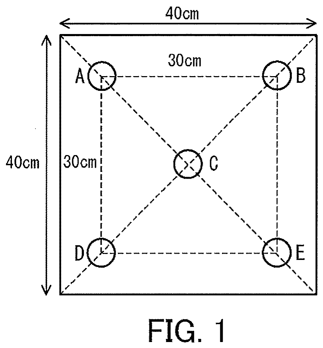

FIG. 1 is a diagram illustrating a method for calculating the coefficient of kinetic friction in examples.

### DETAILED DESCRIPTION

A coating-attached glass article according to a first aspect of the present invention includes:
a glass substrate; and
an easy-to-clean coating on the glass substrate, wherein
the glass substrate has a function or composition that suppresses diffusion of an alkali metal element into the coating, and
the easy-to-clean coating contains an inorganic substance as a main component.

In a second aspect of the present invention, for example, the coating-attached glass article according to the first aspect satisfies at least one selected from the group consisting of the following (i) to (iv):
(i) the glass substrate is formed of alkali-free glass;
(ii) the glass substrate is formed of low-alkali glass;
(iii) the glass substrate includes a dealkalized layer in a surface on a coating side; and
(iv) an underlayer is provided between the glass substrate and the coating.

In a third aspect of the present invention, for example, the coating-attached glass article according to the first or second aspect is such that a content of an alkali metal oxide in a glass composition constituting the glass substrate is 10 mass% or less.

In a fourth aspect of the present invention, for example, the coating-attached glass article according to any one of the first to third aspects is such that the glass substrate is formed of alkali-free glass.

In a fifth aspect of the present invention, for example, the coating-attached glass article according to any one of the first to fourth aspects is such that the inorganic substance includes at least one selected from the group consisting of an oxide of a rare earth element, zirconium oxide, niobium oxide, and tantalum oxide.

In a sixth aspect of the present invention, for example, the coating-attached glass article according to the fifth aspect is such that the oxide of the rare earth element includes at least one selected from the group consisting of cerium oxide, lanthanum oxide, and yttrium oxide.

In a seventh aspect of the present invention, for example, the coating-attached glass article according to any one of the first to sixth aspects is such that a coefficient of kinetic friction of the surface of the easy-to-clean coating after exposure of the coating-attached glass article to a heat treatment at 760°C for 4 minutes is 0.50 or less.

In an eighth aspect of the present invention, for example, the coating-attached glass article according to any one of the first to seventh aspects is such that the glass substrate is formed of reinforced glass.

In a ninth aspect of the present invention, for example, the coating-attached glass article according to any one of the first to eighth aspects is at least one selected from the group consisting of glass for architecture, glass for transport vehicles, glass for stores, glass for furniture, glass for home appliances, glass for signage, glass for mobile devices, and glass for solar cells.

In a tenth aspect of the present invention, for example, the coating-attached glass article according to any one of the first to ninth aspects is such that the easy-to-clean coating has at least one function selected from the group consisting of an antiglare function and an antifogging function.

The following description of embodiments of the present invention is not intended to limit the present invention to specific embodiments. As used herein, the term "main component" means a component having a content of 50% or more, particularly 60% or more, on a mass basis. The phrase "contain only a trace amount" means that the content of a component is 10% or less, 8% or less, even 7.5% or less, and in some cases, 3% or less, on a mass basis. The phrase "substantially free" means that the content of a component is less than 1% or even less than 0.1% on a mass basis. The phrase "substantially flat" means that no irregularities having a height or depth of 500 nm or more are observed on a surface using a scanning electron microscope (SEM). The term "ordinary temperature" is used as a term that means a temperature in the range of 5 to 35°C, particularly 10 to 30°C.

### [Coating-Attached Glass Article]

An easy-to-clean-coating-attached glass article (hereinafter also simply referred to as a "glass article") provided by the present embodiment includes a glass substrate and an easy-to-clean coating (hereinafter also simply referred to as a "coating") on the glass substrate. The glass substrate has a function or composition that suppresses diffusion of an alkali metal element into the coating. The coating contains an inorganic substance as a main component.

A deterioration in the easy-to-clean properties of an easy-to-clean coating formed on a glass substrate is caused, for example, by heating of the glass substrate. Studies conducted by the present inventors have found that the cause for the deterioration in the easy-to-clean properties of the coating lies in diffusion of an alkali component (alkali metal element) from the glass substrate into the coating. Furthermore, subjecting the glass substrate to heat treatment generates locations where an alkali metal element, such as Na, is diffused in a non-uniform manner. According to studies conducted by the present inventors, at locations where the concentration of an alkali metal element (especially Na) is high, the coefficient of kinetic friction is high, resulting in a variation in the coefficient of kinetic friction. Accordingly, the smaller the amount of the alkali metal element diffused into the coating, the more effectively the deterioration in the easy-to-clean properties of the coating and the variation in the easy-to-clean properties can be suppressed. The glass article of the present embodiment can suppress the deterioration in the easy-to-clean properties of the coating and the variation in the easy-to-clean properties, because the glass substrate has a function or composition that suppresses diffusion of an alkali metal element into the coating.

The glass article may satisfy at least one selected from the group consisting of the following (i) to (iv):
(i) the glass substrate is formed of alkali-free glass;
(ii) the glass substrate is formed of low-alkali glass;
(iii) the glass substrate includes a dealkalized layer in the surface on the coating side; and
(iv) an underlayer is provided between the glass substrate and the coating.

The glass article that satisfies at least one selected from the group consisting of (i) to (iv) above can suppress the diffusion of the alkali metal element into the coating.

The glass substrate and the coating that constitute the glass article of the present embodiment will be described below. Subsequently, applications of the glass article will be described, followed finally by a description of a glass article manufacturing method of the present embodiment.

### (Glass Substrate)

The type of glass forming the glass substrate is not particularly limited as long as the glass has a function or composition that suppresses diffusion of an alkali metal element into the coating. For example, the glass substrate may be formed of any of various glasses referred to as alkali-free glass, low-alkali glass, borosilicate glass, aluminosilicate glass, quartz glass, and the like. These glass substrates may contain SiO₂ as a main component. The glass substrate may include an oxide of a Group 1 element (an alkali component or an alkali metal element) typified by sodium or potassium. The glass substrate may include a Group 2 element typified by calcium. The size and shape of the glass substrate are not particularly limited, either. The glass substrate may be a glass sheet, a glass container, a glass lid, a glass tube, a glass bulb, a glass lens, or other formed bodies. The glass container is, for example, a glass vial, a glass ampoule, or a glass bottle, and may have other shapes such as the shape of a tray or a Petri dish. The shape of the glass lid is not limited as long as the glass lid functions as a lid. The glass lid may have a shape, for example, allowing the glass lid to be used as a lid of a cooking device.

The glass substrate may be formed of a glass other than soda-lime glass. Soda-lime glass is a type of glass containing Na₂O, CaO, and SiO₂. For example, the composition of soda-lime glass on a mass basis is as follows: a content of SiO₂ of 70 to 73%, a content of Al₂O₃ of 0.6 to 2.4%, a content of Fe₂O₃ of 0.08 to 0.14%, a content of CaO of 7 to 12%, a content of MgO of 1.0 to 4.5%, and a content of Na₂O of 13 to 15%. Soda-lime glass includes more than 10 mass% of an alkali metal oxide. The content of Fe₂O₃ herein is based on a value calculated under the assumption that all iron elements are present as trivalent iron (Fe³⁺).

The glass substrate may be formed of alkali-free glass, which is substantially free of an alkali component (alkali metal oxide). That is, the glass article may satisfy (i) above. For example, the composition of alkali-free glass on a mass basis is as follows: a content of SiO₂ of 58 to 70%, a content of Al₂O₃ of 15.5 to 20%, a content of B₂O₃ of 0 to 1%, a content of MgO of 0 to 5%, a content of CaO of 3.5 to 16%, a content of SrO of 0.5 to 6.5%, and a content of BaO of 5 to 15%.

The glass substrate may be formed of low-alkali glass, which contains only a trace amount of an alkali component (alkali metal oxide). That is, the glass article may satisfy (ii) above. Even when the glass substrate is formed of low-alkali glass, the diffusive movement of the alkali component in the glass from the glass substrate into the coating is suppressed.

The content of the alkali metal oxide in the glass composition constituting the glass substrate may be 10 mass% or less. The content of the alkali metal oxide in the glass composition constituting the glass substrate may be 9 mass% or less, 8 mass% or less, or even 7 mass% or less. The lower limit of the content of the alkali metal oxide in the glass composition constituting the glass substrate is, for example, 0 mass% and may be 0.1 mass%.

The glass substrate may contain SiO₂ as a main component. The glass substrate having a high content of SiO₂ is typically formed of quartz glass.

The glass substrate may include a dealkalized layer in the surface on the coating side. That is, the glass article may satisfy (iii) above. Even when the glass substrate include the dealkalized layer, the diffusive movement of the alkali component in the glass from the glass substrate into the coating is suppressed.

In the present embodiment, the dealkalized layer refers to a silica-rich layer formed by a dealkalization reaction in the surface of the glass substrate and subsequent densification. The glass substrate including the dealkalized layer in the surface on the coating side can be manufactured, for example, by the float process, which is a method for continuously manufacturing glass sheets. In the float process, a glass raw material molten in a float furnace is formed into a sheet-like glass ribbon on a molten metal in a float bath, and the glass ribbon is gradually cooled in an annealing furnace and then cut into glass sheets of a predetermined size. In the present embodiment, a case of using molten tin as the molten metal will be described. Hereinafter, in the context of a glass sheet, the surface in contact with molten tin during the forming process in a float bath will be referred to as the "bottom surface." The surface opposite the bottom surface, not in contact with molten tin, will be referred to as the "top surface."

First, for example, at least the bottom surface is subjected to a dealkalization treatment. The term "dealkalization" herein means bringing an oxidizing gas, which reacts with alkali components, into contact with the surface of the glass sheet to extract an alkali component from the glass. The extracted alkali component reacts with the oxidizing gas, resulting in the formation of a protective coating in at least the bottom surface of the glass sheet.

As the oxidizing gas, for example, sulfurous acid gas (SO₂ gas) can be used. The SO₂ reacts with a component in the glass to form an alkali sulfate, such as sodium sulfate, on the surface of the glass sheet. This alkali sulfate serves as the protective coating. The oxidizing gas used here is not limited to SO₂ gas, and may be any gas that can form a protective coating through reaction with an alkali component in the glass. As a carrier gas for SO₂ gas, air or an inert gas, such as nitrogen or argon, may be used. The oxidizing gas may further contain water vapor.

Subsequently, densification occurs in the portion where the protective coating has been formed. Specifically, in place of the alkali component extracted by the dealkalization, moisture in the atmosphere enters the glass in various forms such as a proton (H⁺) and an oxonium ion (H₃O⁺) to form a silanol group (Si-OH) in the portion where the protective coating has been formed. This silanol group undergoes dehydration condensation to form a siloxane bond (Si-O-Si). In the present embodiment, a state in which the number of siloxane bonds is increased by such dehydration condensation is referred to as "densified." The glass sheet surface having an increased number of siloxane bonds becomes resistant to etching; accordingly, the degree of densification can be determined by measuring the etching rate.

A dealkalized layer is formed in at least the bottom surface by the method described above. The top surface may also be subjected to the treatment for forming a dealkalized layer. Furthermore, even when the oxidizing gas is blown only onto the bottom surface, a portion of the blown oxidizing gas can flow around to the top surface side, whereby the top surface is treated and a dealkalized layer is formed in the top surface as well.

In the present embodiment, the dealkalized layer in the surface on the coating side of the glass substrate may be a dealkalized layer formed in the bottom surface, or may be a dealkalized layer formed in the top surface. The formation of the dealkalized layer in the surface on the coating side of the glass substrate results in suppression of the diffusive movement of the alkali component in the glass from the glass substrate into the coating.

Even when a portion of the oxidizing gas blown onto the bottom surface flows around to the top surface side to form a dealkalized layer in the top surface as well, the thickness of the dealkalized layer in the top surface is sometimes greater than the thickness of the dealkalized layer formed in the bottom surface. This is because the presence of a tin oxide diffusion layer in the surface layer of the bottom surface suppresses the reaction between the SO₂ gas and a component in the glass, thereby suppressing formation of the dealkalized layer. In the present embodiment, the dealkalized layer in the surface on the coating side may be the dealkalized layer formed in the top surface. In this case, the diffusive movement of the alkali component in the glass from the glass substrate into the coating is more effectively suppressed.

As described above, the glass substrate may be a glass sheet. The glass sheet may have the shape of a flat plate, or may have a curved shape achieved by a bending treatment. The thickness of the glass sheet is not particularly limited, and is, for example, 0.5 mm or more and 12 mm or less. The glass sheet may be treated so as to be suitable for use as window glass of architecture, vehicles, and the like. The glass sheet may be subjected to, for example, a reinforcement treatment. In other words, the glass substrate such as a glass sheet may be formed of reinforced glass. Known reinforcement treatments include thermal tempering, in which the glass sheet is rapidly cooled after heating to form a compressive stress layer in a surface of the glass sheet, and chemical strengthening, in which a compressive stress layer is formed in a surface of the glass sheet by ion exchange of alkali metal ions. The glass sheet may be integrated with another glass sheet by lamination processing and/or double-glazing processing.

Many of the above-described treatments of glass sheets involve heating of the glass sheets. For example, the bending treatment of a glass sheet includes a step of softening the glass sheet by heating. In a lamination processing treatment and a double-glazing processing treatment as well as in the reinforcement treatment, glass sheets can be heated to high temperatures depending on the type of resin film interposed between the glass sheets or the type of sealant used to seal the space between the glass sheets. To prevent deterioration in the easy-to-clean properties of the easy-to-clean coating due to such heating, it is also conceivable to form the coating after the treatment involving heating of the glass sheet. However, such a restriction on manufacturing steps can reduce the efficiency in mass production. For example, it is significantly more difficult to uniformly apply a coating liquid onto a curved surface than onto a surface of a flat plate. A step of applying a coating liquid onto a flat glass strip, before cutting and processing the strip into pieces having a curved plane, can be performed significantly more efficiently.

Such a deterioration in easy-to-clean properties caused by a treatment involving heating can occur not only in glass sheets but also in all types of glass substrates. In contrast, according to the present embodiment in which the easy-to-clean properties are exhibited without reliance on an organic substance, a deterioration in easy-to-clean properties caused by heating can be suppressed. Hence, according to the method of the present embodiment, after the formation of the coating, the glass substrate having the coating formed thereon can be heated to be subjected to various treatments.

The various treatments involving heating include, in the case of the glass sheet, for example, at least one selected from the group consisting of a bending treatment involving heating (heat bending treatment), a thermal tempering treatment, a chemical strengthening treatment, a lamination processing treatment, a double-glazing processing treatment, and a coating formation treatment, and are particularly a heat bending treatment and/or a thermal tempering treatment. That is, in the present embodiment, the glass substrate may be a glass sheet subjected to at least one treatment selected from the group consisting of a heat bending treatment and a thermal tempering treatment. The temperature set in the above heat treatments is commonly, at most, approximately 760°C.

Conventionally, a glass sheet is subjected to a heat bending treatment and/or a thermal tempering treatment after being cut into a predetermined shape, and then a coating liquid for formation of an easy-to-clean coating is applied onto a principal surface of the glass sheet. Accordingly, a portion of the coating liquid is attached to an edge face of the glass sheet and the coating is formed also on at least a portion of the edge face. In contrast, according to the present embodiment, it is possible to form the easy-to-clean coating by applying a coating liquid onto one principal surface of a flat-plate-shaped glass sheet and thereafter subject the glass sheet to at least one treatment selected from the group consisting of a heat bending treatment and a thermal tempering treatment. The glass sheet provided by this embodiment can be a glass sheet having the coating on at least one principal surface of the glass sheet, and not having the coating on an edge face of the glass sheet. According to a conventional method, the resulting coating can be locally thick at the edge face where the coating liquid tends to accumulate. Accordingly, the ability to prevent the formation of a locally thick coating at the edge face is advantageous, for example, in ensuring a fine product appearance. Such quality improvement is achieved, and in addition, coating treatment can be continuously performed on a large-area glass sheet before cutting, thereby contributing to a reduction in the cost of the final product.

### (Coating)

In the present embodiment, the easy-to-clean coating contains an inorganic substance as a main component. The coating containing the inorganic substance as a main component is suitable when high-temperature heating treatment is performed. The coating may be substantially free of an organic substance. Examples of the inorganic substance include various inorganic compounds, such as oxides, nitrides, and carbides, and an oxide is preferred. The coating may contain an oxide as a main component. Preferred oxides include an oxide of a rare earth element, zirconium oxide, niobium oxide, and tantalum oxide. These oxides are suitable for exhibiting appropriate easy-to-clean properties. The oxide may include at least one selected from the group consisting of an oxide of a rare earth element, zirconium oxide, niobium oxide, and tantalum oxide.

A particularly preferred oxide is zirconium oxide. The coating may include zirconium oxide. The zirconium oxide may account for 5 mol% or more, 8 mol% or more, or 9 mol% or more of the coating. The upper limit of the content of the zirconium oxide is not particularly limited, and is preferably 90 mol%. When the content of the zirconium oxide exceeds 90 mol%, the adhesion between the glass substrate and the coating tends to decrease. The coating may contain the zirconium oxide as a main component. The coating may be a film substantially free of a component other than the zirconium oxide.

The coating may include an oxide of a rare earth element. The oxide of the rare earth element may include at least one selected from the group consisting of cerium oxide, lanthanum oxide, and yttrium oxide.

The oxide of the rare earth element may be cerium oxide. The cerium oxide is a preferred material that can impart appropriate easy-to-clean properties as the zirconium oxide does. The cerium oxide can be crystalline. A crystalline rare earth oxide, particularly crystalline cerium oxide, is suitable for exhibiting easy-to-clean properties. The crystallite size of the crystalline cerium oxide is, for example, in the range of 4 to 10 nm. When the crystals have developed such that the crystallite size falls in this range, the diffusion distance from the glass substrate increases even with a thin coating, making it less likely for the alkali component (alkali metal element) to reach the surface of the coating.

According to studies conducted by the present inventors using X-ray diffraction, a combination of the zirconium oxide and the cerium oxide is particularly suitable for use in the easy-to-clean coating in that the zirconium oxide can cooperate with the cerium oxide without impairing the crystallinity of the cerium oxide.

The cerium oxide may account for 10 mol% or more, 30 mol% or more, 40 mol% or more, or even 50 mol% or more of the coating. The upper limit of the content of the cerium oxide is not particularly limited, and is preferably 95 mol%. When the content of the cerium oxide exceeds 95 mol%, the adhesion between the glass substrate and the coating tends to decrease. The coating may contain the cerium oxide as a main component. The coating may be a film substantially free of a component other than the cerium oxide, or may be a film substantially free of a component other than the cerium oxide and the zirconium oxide. The cerium oxide preferably includes CeO₂, which is an oxide of tetravalent cerium. CeO₂ is a more desirable component than Ce₂O₃, which is an oxide of trivalent cerium, from the perspective of improving the easy-to-clean properties. However, the coating may include Ce₂O₃ as the cerium oxide. For example, when a compound including trivalent cerium is used as a source of the cerium oxide and a portion thereof is oxidized to tetravalent cerium, the remaining trivalent cerium is included as Ce₂O₃ in the coating together with CeO₂. Herein, the content, ratio, proportion, and the like of cerium oxide in the coating are calculated from all of the cerium oxide in terms of CeO₂, that is, under the assumption that all of the cerium is present in the tetravalent state.

In the easy-to-clean coating, the molar ratio of the cerium oxide to the zirconium oxide (cerium oxide/zirconium oxide) is not particularly limited, and may be 0.01 or more, 0.1 or more, 0.5 or more, 0.75 or more, or even 1 or more, and may be 50 or less, 30 or less, 20 or less, or even 15 or less.

The coating may include aluminum oxide, in addition to the zirconium oxide and/or the oxide of the rare earth element. The aluminum oxide can contribute to improving the easy-to-clean properties of the coating. The aluminum oxide may account for 5 mol% or more, 10 mol% or more, or even 20 mol% or more of the coating. The upper limit of the content of the aluminum oxide is not particularly limited, and is preferably 50 mol%. When the content of the aluminum oxide exceeds 50 mol%, the easy-to-clean properties of the coating tend to deteriorate.

The sum of the content of the Group 1 element and the content of the Group 2 element in the surface of the coating on the glass substrate side is preferably limited. The sum of the contents may be 5 mass% or less, 4 mass% or less, 3 mass% or less, or even 2 mass% or less. However, the sum of the content of the Group 1 element and the content of the Group 2 element in the glass composition constituting the glass substrate may be more than 5 mass%, 7 mass% or more, or even 10 mass% or more. A component that can primarily affect the properties of the coating is the Group 1 element; however, the Group 2 element can also affect the properties of the coating.

In the present embodiment, the coefficient of kinetic friction of the surface of the coating after exposure of the glass article to a heat treatment at 760°C for 4 minutes can be 0.50 or less. The coefficient of kinetic friction is defined as the ratio F/W, where F is the frictional force acting on the contact surface between two objects in motion while in contact with each other, and W is the normal force acting in the direction perpendicular to the contact surface. The present inventors have found that the coefficient of kinetic friction, which correlates with surface roughness, is appropriate as an index for evaluating the easy-to-clean properties of a coating that contains an inorganic substance as a main component. A glass article having a coefficient of kinetic friction of the surface of the coating in the above range exhibits excellent easy-to-clean properties. Specifically, in a glass article having a coefficient of kinetic friction of the surface of the coating in the above range, dirt and/or foreign matter adhering to the surface of the coating can be easily washed away by simply showering water over the dirt and/or foreign matter. Conventionally, showering water reduces, to a certain extent, the amount of dirt and/or foreign matter adhering to the surface of the coating; however, there still remain locations on the surface of the coating where the dirt and/or foreign matter remain. One possible cause is that subjecting the glass substrate to heat treatment generates locations where diffusion of an alkali component (alkali metal element), such as Na, becomes non-uniform. The coefficient of kinetic friction is high at locations where the concentration of an alkali metal element (especially Na) is high, resulting in a variation in the coefficient of kinetic friction. Consequently, a dirt spot remains on the surface of the coating, deteriorating the appearance. According to studies conducted by the present inventors, when the coefficient of kinetic friction itself is low, the variation in the coefficient of kinetic friction is also inevitably low, resulting in a smaller dirt spot to improve the appearance. The coefficient of kinetic friction of the surface of the coating after exposure to the heat treatment can decrease to 0.45 or less, 0.40 or less, 0.35 or less, or even 0.30 or less. However, in the present embodiment, the coefficient of kinetic friction of the surface of the coating may be measured after a while from the heat treatment because the coefficient of kinetic friction of the surface of the coating can increase temporarily immediately after the heat treatment depending on the components in the coating. Recovery of the coefficient of kinetic friction can require several tens of days. Accordingly, the above coefficient of kinetic friction may be measured, for example, after exposure of the glass article to a heat treatment at 760°C for 4 minutes, followed by storage in air at ordinary temperature for 4 weeks.

The lower limit of the coefficient of kinetic friction of the surface of the coating after exposure to the heat treatment is not particularly limited. The lower limit of the coefficient of kinetic friction may be, for example, 0.05, 0.08, or even 0.09.

In the present embodiment, the variation in the coefficient of kinetic friction of the surface of the coating can be ±0.10 (dimensionless). Thus, the glass article of the present embodiment exhibits suppressed variation in the easy-to-clean properties of the surface of the coating. In the glass article that exhibits suppressed variation in the easy-to-clean properties, a dirt spot is less likely to remain on the surface of the coating.

In the present embodiment, the coating may be substantially free of a fluorine-containing organic compound, particularly a fluoroalkyl-containing compound.

The coating of the present embodiment may be a single-layer film or may be a multi-layer film composed of a plurality of layers. However, a single-layer film is advantageous in reducing mass production costs. Even when the coating of the present embodiment is a single-layer film, easy-to-clean properties can still be provided. When the coating of the present embodiment is a multi-layer film, the coating desirably includes a layer including the zirconium oxide as the topmost layer of the multi-layer film.

In other words, in the present embodiment, an underlayer may further be provided between the glass substrate and the coating. That is, the glass article may satisfy (iv) above. By providing the underlayer, the diffusive movement of the alkali component in the glass from the glass substrate into the coating is suppressed. The underlayer is, for example, a metal oxide layer. Specifically, the underlayer may be a layer having a lower content of zirconium oxide on a mass basis than that of the outer coating layer, or even substantially free of zirconium oxide. The underlayer may include at least one selected from the group consisting of silicon oxide and aluminum oxide. One desirable example of the underlayer is a layer containing silicon oxide as a main component. The underlayer itself may be composed of a plurality of layers.

The underlayer may be amorphous. Since the easy-to-clean coating is crystalline, the alkali component (alkali metal element) is likely to move diffusively from the glass substrate into the coating. However, when the underlayer is amorphous, the diffusive movement of the alkali metal element from the glass substrate into the coating is more effectively suppressed because of the absence of grain boundaries.

The thickness of the underlayer is, for example, in the range of 10 to 400 nm. The thickness of the underlayer may be 10 nm or more, 20 nm or more, or even 30 nm or more, and may be 350 nm or less, 300 nm or less, or even 250 nm or less.

The underlayer may be a layer that can function as a low-emissivity film (Low-E film), an electrically conductive film, a reflection-reducing film, a colored film, or the like.

The Low-E film is, for example, a laminate film including an electrically conductive layer. The Low-E film has, for example, a laminate structure in which a color tone adjustment layer and the electrically conductive layer are laminated in this order from the principal surface side of the glass substrate. The color tone adjustment layer is, for example, a layer containing, as a main component, at least one selected from oxides of silicon, aluminum, zinc, and tin. The color tone adjustment layer can be a layer containing tin oxide as a main component. The thickness of the color tone adjustment layer is, for example, 25 nm or more and 90 nm or less, particularly 35 nm or more and 70 nm or less. The color tone adjustment layer may be composed of two or more layers having different refractive indices. The two layers having different refractive indices are, for example, in order from the glass substrate (such as a glass sheet) side, a first color tone adjustment layer containing tin oxide as a main component and a second color tone adjustment layer containing silicon oxide as a main component. However, the lamination order of the first color tone adjustment layer and the second color tone adjustment layer is not particularly limited. The electrically conductive layer is, for example, a layer containing, as a main component at least one selected from indium tin oxide (ITO), zinc aluminum oxide, antimony-doped tin oxide (SnO₂:Sb), and fluorine-doped tin oxide (SnO₂:F). The electrically conductive layer can be a layer containing fluorine-doped tin oxide (SnO₂:F) as a main component. The thickness of the electrically conductive layer is, for example, 100 nm or more and 350 nm or less, particularly 120 nm or more and 260 nm or less.

The thickness of the easy-to-clean coating is, for example, 2 nm or more and 1000 nm or less, even 5 nm or more and 500 nm or less, particularly 10 nm or more and 300 nm or less. The thickness of the coating may be 15 nm or more or even 20 nm or more, and may be 100 nm or less or even 50 nm or less. When the easy-to-clean coating is excessively thick, cracking is likely to occur, which causes delamination. From this perspective, the thickness of the coating is desirably 30 nm or less.

The surface of the easy-to-clean coating may be substantially flat.

When the glass substrate is a glass sheet, the coating may be formed on only one principal surface of the glass sheet, or may be formed on both principal surfaces of the glass sheet. However, to prevent a decrease in visible transmittance, the coating is desirably formed on only one principal surface of the glass sheet.

### (Applications of Glass Article)

The glass article according to the present embodiment can be used in various applications, and is particularly suitable for use as a glass article used in an environment in which adherence of water drops occurs. Such water drops are commonly supplied from natural water, such as rain or mist, or tap water. The glass article according to the present embodiment may be, specifically, an article that is at least one selected from the group consisting of glass for architecture, glass for transport vehicles, glass for stores, glass for furniture, glass for home appliances, glass for signage, glass for mobile devices, and glass for solar cells. The glass article according to the present embodiment may be an article that is at least one selected from the group consisting of window glass, roof glass, glass for bathrooms, mirrors, glass for stores, glass for mobile devices, and glass for solar cells. Examples of the window glass include window glass of architecture and transport vehicles, and the same applies to the roof glass. The architecture includes not only houses and tall buildings but also greenhouses, arcades, and other constructions fixed to the ground. The transport vehicles include land vehicles, vessels, and aircraft. Examples of the land vehicles include motor vehicles and railroad cars. Examples of the glass for bathrooms include glass partitions and glass doors of bathrooms. Examples of the mirrors include mirrors in bathrooms and mirrors of bathroom vanities. Examples of the glass for stores include display windows, counters, tables, glass doors of refrigerated cases and freezer cases, and showcases for food and the like. Examples of the glass for mobile devices include glass that covers displays of mobile devices, such as smartphones and tablet PCs, and, in some cases, glass that forms housings of mobile devices. Examples of the glass for solar cells include cover glasses disposed on the light incident side of solar cells. Particularly when safety for the human body needs to be ensured, reinforced glass is often used in the applications described above.

In the applications described above, the easy-to-clean coating of the present embodiment may have other functions such as antiglare and antifogging functions as well as the easy-to-clean properties. The easy-to-clean coating of the present embodiment may have at least one function selected from the group consisting of an antiglare function and an antifogging function.

### [Manufacturing Method for Coating-Attached Glass Article]

Next, a glass article manufacturing method of the present embodiment will be described. However, the glass article of the present embodiment may be manufactured by a method other than the following manufacturing method.

The manufacturing method of the present embodiment includes: applying a coating liquid containing an inorganic substance as a main component onto a glass substrate to form a coating film on the glass substrate; and drying the coating film. The inorganic substance includes at least one oxide selected from the group consisting of an oxide of a rare earth element, zirconium oxide, niobium oxide, and tantalum oxide. The oxide of the rare earth element includes at least one selected from the group consisting of cerium oxide, lanthanum oxide, and yttrium oxide. The oxide present in the solids content does not need to be present as a complete oxide, as long as it is a component that can supply the oxide to the coating. For example, when the oxide is zirconium oxide, the oxide present in the solids content also encompasses zirconium oxyhydroxide, zirconium hydroxide, and the like that can supply zirconium oxide after dehydration condensation.

This manufacturing method may further include preparing the coating liquid. The coating liquid may contain a polar solvent, particularly a lower alcohol having 5 or less carbon atoms, as a solvent. The lower alcohol may be methanol and/or ethanol. The step of preparing the coating liquid may include dissolving a zirconium compound in the polar solvent. Hence, the zirconium compound may be a compound soluble in the polar solvent.

The prepared coating liquid is applied onto the glass substrate. The application of the coating liquid can be performed, for example, by a known method, such as spin coating, bar coating, spray coating, nozzle flow coating, or roll coating.

The manufacturing method of the present embodiment may further include subjecting the coating film to at least one treatment selected from washing and drying.

When the coating liquid contains an oxide of a rare earth element, such as cerium oxide, together with the zirconium oxide, the manufacturing method of the present embodiment includes: applying a coating liquid containing the zirconium oxide and the cerium oxide onto the glass substrate to form a coating film on the glass substrate; and drying the coating film. The cerium oxide includes CeO₂. The cerium oxide does not need to be present as a complete oxide, as long as it is a component that can supply the cerium oxide to the coating. The cerium oxide also encompasses cerium oxyhydroxide, cerium hydroxide, and the like that can supply cerium oxide after dehydration condensation.

In this case, the step of preparing the coating liquid may further include hydrolyzing a cerium compound including trivalent cerium. The hydrolyzable cerium compound is preferably a compound soluble in the polar solvent, and is specifically preferably selected from water-soluble cerium compounds. The cerium compound may be, for example, at least one selected from the group consisting of a halogenated cerium and cerium nitrate. The halogenated cerium is, for example, cerium(III) chloride or cerium(III) bromide. Preferred cerium compounds are compounds of trivalent cerium, as exemplified above, including cerium(III) nitrate. However, the cerium compound is not limited thereto and may include tetravalent cerium. The oxidation of trivalent cerium to tetravalent cerium requires time in some cases. Accordingly, when the coating liquid contains the zirconium oxide and the cerium oxide, the manufacturing method of the present embodiment may further include holding, for a predetermined time, at least one selected from the coating liquid and the coating film in a wet state. This step can be performed, for example, by holding, at a temperature of 5 to 80°C for 0.5 to 48 hours, at least one selected from the prepared coating liquid and the coating film in a wet state. This step allows what is called "aging" of the coating liquid or the coating film to proceed, increasing the proportion of tetravalent cerium. A preferred aging target is the coating liquid. For example, for the coating liquid, a color attributed to tetravalent cerium starts to be observed as conversion to tetravalent cerium progresses. The coating liquid containing only trivalent cerium is colorless, as long as no other materials that cause coloring is included. Typically, the coating liquid can be colored a brownish color first and then a yellowish color as more tetravalent cerium is generated. To generate a sufficient amount of tetravalent cerium during the holding period, the pH of the coating liquid is desirably maintained so as not to be too low.

The process of generation of tetravalent cerium can be monitored in the absorption spectra from the ultraviolet region to the visible region. For example, the absorption edge of the coating liquid in the ultraviolet region shifts towards longer wavelengths as more tetravalent cerium is generated. When the aging continues until this absorption edge shifts to a region of, for example, 350 nm or more, particularly 360 nm or more, a sufficient amount of tetravalent cerium to form the easy-to-clean coating is generated.

The manufacturing method of the present embodiment may further include, after the forming of the easy-to-clean coating on the glass substrate, subjecting the glass substrate to a treatment involving heating. The treatment involving heating is at least one selected from the group consisting of the examples described above, particularly a heat bending treatment and/or a thermal tempering treatment. However, the glass substrate of the present embodiment can also be used without being subjected to such treatment.

The manufacturing method of the present embodiment can also be performed as a method including: applying a coating liquid containing a chelated zirconium ion onto the glass substrate to form a coating film on the glass substrate; and drying the coating film. To chelate a zirconium ion, a common chelating agent, such as EDTA or acetylacetone, can be used without particular limitations.

When the coating liquid contains the zirconium oxide and the cerium oxide, the manufacturing method of the present embodiment can also be performed as a method including: applying a coating liquid containing a chelated zirconium ion and a chelated cerium ion onto the glass substrate to form a coating film on the glass substrate; and drying the coating film. For the chelation, a common chelating agent, such as EDTA or acetylacetone, can be used without particular limitations. The cerium ion in the coating liquid may be trivalent cerium. At least a portion of the chelated trivalent cerium ion is likely to be oxidized to a tetravalent cerium ion in the drying step after the application of the coating liquid and in a subsequent heating treatment step.

In a glass article manufactured by the glass article manufacturing method of the present embodiment, the variation in the coefficient of kinetic friction of the surface of the coating can be ±0.10 (dimensionless). In a glass article in which the variation in the coefficient of kinetic friction is in the above range, a dirt spot is less likely to remain on the surface of the coating.

### (Other Manufacturing Methods)

The glass article of the present embodiment is not limited to manufacture by liquid-phase deposition exemplified above. For example, CVD (chemical vapor deposition), PVD (physical vapor deposition), or the like may be employed to form the coating on the glass substrate.

### Examples

The present invention will be described in more detail below with reference to examples. The following examples are not intended to limit the present invention to specific embodiments.

### (Heat Treatment)

The heat treatment was performed as follows: the glass article was heated in an electric furnace set at 760°C for 4 minutes, taken out of the furnace, wrapped in ceramic wool, and then cooled to room temperature at a cooling rate that does not cause thermal cracking. After the heat treatment, the glass article was left in air at ordinary temperature for 4 weeks, after which the coefficient of kinetic friction was evaluated. The relative humidity of the atmosphere during the leaving was approximately 20 to 60%.

### (Coefficient of Kinetic Friction)

The coefficient of kinetic friction was measured by the following method. An automatic friction abrasion analyzer (TSf-503, Bowden type) manufactured by Kyowa Interface Science Co., Ltd. was used for the measurement. A40 cm square glass article was used as the measurement sample. With a contactor (steel ball) brought into contact with the coating-side surface of the measurement sample under a minute load (normal force W = 200 g), the frictional force F was measured while the stage on which the measurement sample was placed was moved over a distance of 50 cm at a speed of 10 mm/s. FIG. 1 is a diagram illustrating a method for calculating the coefficient of kinetic friction. As shown in FIG. 1, the frictional force F at five points A to E on the coating-side surface of the glass article was measured. The coefficient of kinetic friction was calculated from the formula F/W. The average of the coefficients of kinetic friction calculated at the five points was defined as the coefficient of kinetic friction of the surface of the coating.

### <Example 1>

A batch was prepared using an oxide and a carbonate including silica, alumina, and calcium carbonate, as glass raw materials, so as to achieve the composition shown in Table 1 as Example 1. The prepared batch was put into a platinum crucible, held at 1580°C for 4 hours, and poured out onto an iron plate. This glass was held at 650°C in an electric furnace for 30 minutes, after which the power to the furnace was turned off and the glass was allowed to cool to room temperature. The resulting glass sheet had a thickness of 5 mm. This glass sheet was cut into a 40 cm square piece, which was washed and dried. The glass sheet thus obtained was used as the glass substrate of Example 1. The glass substrate of Example 1 was formed of alkali-free glass.

In 268.8 g of a solvent mixture containing ethanol as a main solvent (Fineeter A-10, manufactured by FUTABA PURE CHEMICAL CO., LTD.), 4.04 g of cerium(lll) nitrate hexahydrate (Ce(NO₃)₃•6H₂O) (manufactured by FUJIFILM Wako Pure Chemical Corporation, 98%), 67.2 g of acetylacetone, and 60 g of propylene glycol were dissolved to obtain a coating liquid. The coating liquid was aged by continuous stirring at 40°C for 15 hours or more. After the aging, the coating liquid exhibited a pale yellow color. The coating liquid thus obtained was used as the coating liquid of Example 1.

The coating liquid of Example 1 was spray-applied onto one principal surface of the glass substrate of Example 1, and the above-described drying treatment was performed. After the drying treatment, the coating-attached glass article was subjected to the above-described heat treatment. The glass article thus obtained was used as the glass article of Example 1.

### <Example 2>

The glass substrate of Example 2 was obtained in the same manner as in Example 1, except that the batch was prepared so as to achieve the composition shown in Table 1 as Example 2. The glass substrate of Example 2 was formed of alkali-free glass.

In 267.0 g of a solvent mixture containing ethanol as a main solvent (Fineeter A-10, manufactured by FUTABA PURE CHEMICAL CO., LTD.), 2.48 g of diacetoxyzirconium(IV) oxide (C₄H₆O₅Zr) (manufactured by Tokyo Chemical Industry Co., Ltd., 20%), 67.2 g of acetylacetone, and 60 g of propylene glycol were dissolved to obtain a coating liquid. The coating liquid was aged by continuous stirring at 40°C for 15 hours or more. After the aging, the coating liquid exhibited a pale yellow color. The coating liquid thus obtained was used as the coating liquid of Example 2.

The glass article of Example 2 was obtained in the same manner as in Example 1, except that the coating liquid used was the coating liquid of Example 2.

### <Example 3>

The same alkali-free glass as in Example 1 was used as the glass substrate of Example 3.

In 268.8 g of a solvent mixture containing ethanol as a main solvent (Fineeter A-10, manufactured by FUTABA PURE CHEMICAL CO., LTD.), 3.98 g of lanthanum(III) nitrate hexahydrate (La(NO₃)₃•6H₂O) (manufactured by FUJIFILM Wako Pure Chemical Corporation, 99%), 67.2 g of acetylacetone, and 60 g of propylene glycol were dissolved to obtain a coating liquid. The coating liquid was aged by continuous stirring at 40°C for 15 hours or more. The coating liquid thus obtained was used as the coating liquid of Example 3.

The glass article of Example 3 was obtained in the same manner as in Example 1, except that the coating liquid used was the coating liquid of Example 3.

### <Example 4>

The same alkali-free glass as in Example 1 was used as the glass substrate of Example 4.

In 268.8 g of a solvent mixture containing ethanol as a main solvent (Fineeter A-10, manufactured by FUTABA PURE CHEMICAL CO., LTD.), 6.38 g of yttrium(III) nitrate hexahydrate (Y(NO₃)₃•6H₂O) (Sigma-Aldrich Co., LLC., 99%), 67.2 g of acetylacetone, and 60 g of propylene glycol were dissolved to obtain a coating liquid. The coating liquid was aged by continuous stirring at 40°C for 15 hours or more. The coating liquid thus obtained was used as the coating liquid of Example 4.

The glass article of Example 4 was obtained in the same manner as in Example 1, except that the coating liquid used was the coating liquid of Example 4.

### <Example 5>

The same alkali-free glass as in Example 1 was used as the glass substrate of Example 5.

In 268.8 g of a solvent mixture containing ethanol as a main solvent (Fineeter A-10, manufactured by FUTABA PURE CHEMICAL CO., LTD.), 6.51 g of niobium(V) chloride (NbCl₅) (manufactured by FUJIFILM Wako Pure Chemical Corporation, 99.99%), 67.2 g of acetylacetone, and 60 g of propylene glycol were dissolved to obtain a coating liquid. The coating liquid was aged by continuous stirring at 40°C for 15 hours or more. The coating liquid thus obtained was used as the coating liquid of Example 5.

The glass article of Example 5 was obtained in the same manner as in Example 1, except that the coating liquid used was the coating liquid of Example 5.

### <Example 6>

The same alkali-free glass as in Example 1 was used as the glass substrate of Example 6.

In 268.8 g of a solvent mixture containing ethanol as a main solvent (Fineeter A-10, manufactured by FUTABA PURE CHEMICAL CO., LTD.), 3.82 g of tantalum(V) oxide (Ta₂O₅) (manufactured by FUJIFILM Wako Pure Chemical Corporation, 99.9%), 67.2 g of acetylacetone, and 60 g of propylene glycol were dissolved to obtain a coating liquid. The coating liquid was aged by continuous stirring at 40°C for 15 hours or more. The coating liquid thus obtained was used as the coating liquid of Example 6.

The glass article of Example 6 was obtained in the same manner as in Example 1, except that the coating liquid used was the coating liquid of Example 6.

### <Example 7>

The glass substrate and glass article of Example 7 were obtained in the same manner as in Example 1, except that the batch was prepared so as to achieve the composition shown in Table 1 as Example 7. The glass substrate of Example 7 was formed of quartz glass.

### <Example 8>

The glass substrate and glass article of Example 8 were obtained in the same manner as in Example 1, except that the batch was prepared so as to achieve the composition shown in Table 1 as Example 8. The glass substrate of Example 8 was formed of low-alkali glass.

### <Example 9>

The glass substrate and glass article of Example 9 were obtained in the same manner as in Example 1, except that the batch was prepared so as to achieve the composition shown in Table 1 as Example 9. The glass substrate of Example 9 was formed of low-alkali glass.

### <Comparative Example 1>

The glass article of Comparative Example 1 was obtained in the same manner as in Example 1, except that soda-lime glass (manufactured by Nippon Sheet Glass Co., Ltd.; float glass sheet; alkali metal oxide content: 13 mass%; thickness: 5 mm) manufactured by the float process was used as the glass substrate of Comparative Example 1.

The composition (mass%) of the glass substrates of Examples 1 to 9 and Comparative Example 1 are shown in Table 1.

For the glass articles of Examples 1 to 9 and Comparative Example 1, the coefficient of kinetic friction was measured by the method described above. The results are shown in Table 1.

Table 2 shows, for the glass articles of Example 9 and Comparative Example 1, the values of the coefficient of kinetic friction, calculated from the frictional force F at five points A to E, as well as their average.

**[Table 1]**

| | Glass substrate | | | | | | | | Coating | Coefficient of kinetic friction |
|---|---|---|---|---|---|---|---|---|---|---|
| | SiO₂ | Al₂O₃ | CaO | MgO | SrO | BaO | Na₂O | Fe₂O₃ | | |
| | mass% | | | | | | | | | |
| Example 1 | 62.0 | 17.0 | 10.0 | 3.0 | 3.0 | 5.0 | 0.0 | 0.0 | CeO₂ | 0.11 |
| Example 2 | 62.0 | 17.0 | 10.0 | 3.0 | 3.0 | 5.0 | 0.0 | 0.0 | ZrO₂ | 0.14 |
| Example 3 | 62.0 | 17.0 | 10.0 | 3.0 | 3.0 | 5.0 | 0.0 | 0.0 | La₂O₃ | 0.18 |
| Example 4 | 62.0 | 17.0 | 10.0 | 3.0 | 3.0 | 5.0 | 0.0 | 0.0 | Y₂O₃ | 0.13 |
| Example 5 | 62.0 | 17.0 | 10.0 | 3.0 | 3.0 | 5.0 | 0.0 | 0.0 | Nb₂O₅ | 0.16 |
| Example 6 | 62.0 | 17.0 | 10.0 | 3.0 | 3.0 | 5.0 | 0.0 | 0.0 | Ta₂O₅ | 0.12 |
| Example 7 | 100.0 | 0.0 | 0.0 | 0.0 | 0.0 | 0.0 | 0.0 | 0.0 | CeO₂ | 0.15 |
| Example 8 | 83.0 | 1.9 | 11.0 | 2.0 | 0.0 | 0.0 | 2.0 | 0.1 | CeO₂ | 0.18 |
| Example 9 | 78.0 | 1.9 | 11.0 | 2.0 | 0.0 | 0.0 | 7.0 | 0.1 | CeO₂ | 0.25 |
| Comparative Example 1 | 72.0 | 1.9 | 11.0 | 2.0 | 0.0 | 0.0 | 13.0 | 0.1 | CeO₂ | 0.64 |

**[Table 2]**

| | Coefficient of kinetic friction | |
|---|---|---|
| | Example 9 | Comparative Example 1 |
| A | 0.35 | 0.44 |
| B | 0.19 | 0.51 |
| C | 0.15 | 0.84 |
| D | 0.26 | 0.64 |
| E | 0.30 | 0.77 |
| Average | 0.25 | 0.64 |

As shown in Table 1, in the glass articles of Examples 1 to 9, the content of the alkali metal oxide in the glass composition constituting the glass substrate was 10 mass% or less. In the glass articles of Examples 1 to 9, the coefficient of kinetic friction of the surface of the coating was 0.50 or less, which suppressed the deterioration in the easy-to-clean properties of the coating compared to that of the glass article of Comparative Example 1. Furthermore, as shown in Table 2, in the glass article of Comparative Example 1, the variation in the coefficient of kinetic friction of the surface of the coating was ±0.20, while in the glass articles of Example 9, the variation in the coefficient of kinetic friction of the surface of the coating was ±0.10, which exhibited suppressed variation in the easy-to-clean properties of the coating. This is presumably because the diffusion of the alkali metal element from the glass substrate into the coating was suppressed in the glass articles of Examples 1 to 9.

## Claims

1. A coating-attached glass article comprising:
a glass substrate; and
an easy-to-clean coating on the glass substrate, wherein
the glass substrate has a function or composition that suppresses diffusion of an alkali metal element into the coating, and
the easy-to-clean coating comprises an inorganic substance as a main component.

2. The coating-attached glass article according to claim 1, satisfying at least one selected from the group consisting of the following (i) to (iv):
(i) the glass substrate is formed of alkali-free glass;
(ii) the glass substrate is formed of low-alkali glass;
(iii) the glass substrate comprises a dealkalized layer in a surface on a coating side; and
(iv) an underlayer is provided between the glass substrate and the coating.

3. The coating-attached glass article according to claim 1, wherein
a content of an alkali metal oxide in a glass composition constituting the glass substrate is 10 mass% or less.

4. The coating-attached glass article according to claim 1, wherein
the glass substrate is formed of alkali-free glass.

5. The coating-attached glass article according to claim 1, wherein
the inorganic substance comprises at least one selected from the group consisting of an oxide of a rare earth element, zirconium oxide, niobium oxide, and tantalum oxide.

6. The coating-attached glass article according to claim 5, wherein
the oxide of the rare earth element comprises at least one selected from the group consisting of cerium oxide, lanthanum oxide, and yttrium oxide.

7. The coating-attached glass article according to claim 1, wherein
a coefficient of kinetic friction of the surface of the easy-to-clean coating after exposure of the coating-attached glass article to a heat treatment at 760°C for 4 minutes is 0.50 or less.

8. The coating-attached glass article according to claim 1, wherein
the glass substrate is formed of reinforced glass.

9. The coating-attached glass article according to claim 1, being at least one selected from the group consisting of glass for architecture, glass for transport vehicles, glass for stores, glass for furniture, glass for home appliances, glass for signage, glass for mobile devices, and glass for solar cells.

10. The coating-attached glass article according to claim 1, wherein
the easy-to-clean coating has at least one function selected from the group consisting of an antiglare function and an antifogging function.
